Europäisches Patentamt

European Patent Office

Office européen des brevets

(19)

(11) EP 0 620 470 B1

(12) **FASCICULE DE BREVET EUROPEEN**

(45) Date de publication et mention
de la délivrance du brevet:
**05.11.1997 Bulletin 1997/45**

(51) Int Cl.6: **G02F 1/11**, H01S 3/117,
H01S 3/06

(21) Numéro de dépôt: **94400791.3**

(22) Date de dépôt: **12.04.1994**

(54) **Procédé de réalisation d'une cellule acousto-optique pour laser déclenché, cellule obtenue, procédé de réalisation collective de microlasers déclenchés et microlasers obtenus**

Verfahren zur Herstellung einer akusto-optischen Zelle für gütegeschaltete Laser sowie Verfahren zur Serienherstellung für gütegeschaltete Mikrolaser

Process for the fabrication of an acousto-optical cell for Q-switched laser and process for batch fabrication of Q-switched microlasers

(84) Etats contractants désignés:
**DE GB IT**

(30) Priorité: **14.04.1993 FR 9304375**

(43) Date de publication de la demande:
**19.10.1994 Bulletin 1994/42**

(73) Titulaire: **COMMISSARIAT A L'ENERGIE ATOMIQUE**
**75015 Paris Cédex 15 (FR)**

(72) Inventeur: **Valette, Serge**
**F-38100 Grenoble (FR)**

(74) Mandataire: **Signore, Robert**
**c/o BREVATOME**
**25, rue de Ponthieu**
**75008 Paris (FR)**

(56) Documents cités:
**EP-A- 0 272 912**         **EP-A- 0 523 861**

- **IEEE PHOTONICS TECHNOLOGY LETTERS, vol.3, no.10, 31 Octobre 1991, New York US, pp. 885-887, XP000226052; H. PLAESSMANN et al.: 'Reducing pulse durations in diode pumped Q-switched solid-state lasers'**
- **OPTICS LETTERS, vol. 17, no.17, 1 Septembre 1992, New York US, pp. 1201-1203, XP000293919; J.J. ZAYHOWSKI et al.: 'Diode-pumped microchip lasers electro-optically Q-switched at high pulse repetition rates'**
- **APPLIED OPTICS, vol. 24, no.12, 15 Juin 1985, New York US, pp. 1784-1787; E. SRIRAM et al.: 'Novel V-groove structures on silicon'**

## Description

### Domaine technique

La présente invention a pour objet un procédé de réalisation d'une cellule acousto-optique pour laser déclenché, une cellule obtenue, un procédé de réalisation collective de microlasers déclenchés et microlasers obtenus.

Elle trouve une application en optique, en physique, en télécommunications optiques, en détection optique (LIDAR), en usinage de matériaux, etc...

### Etat de la technique

Bien que l'invention ne se limite pas à la réalisation de microlasers déclenchés, c'est dans ce contexte particulier que l'invention va être décrite, car c'est là qu'elle trouve une application privilégiée.

Les microlasers ou lasers "puce" (ou "microchip lasers" en terminologie anglo-saxonne) constituent une nouvelle famille de lasers présentant de nombreux avantages. Un microlaser est constitué d'un milieu amplificateur de très faible longueur (allant typiquement de 100 µm à quelques millimètres) encadré par deux miroirs. Ce milieu est pompé optiquement par un faisceau issu généralement d'une diode laser. La puissance de cette diode va généralement d'une centaine à quelques milliers de milliwatts.

Le rendement des microlasers est de l'ordre de 20 à 30%, de sorte qu'ils émettent des puissances de l'ordre de plusieurs dizaines de milliwatts en continu, voire de plusieurs centaines de milliwatts.

L'un des intérêts de ce type de laser est leur mode de fabrication collective. Il suffit en effet de revêtir une plaquette de matériau amplificateur de couches réfléchissantes appropriées et de découper des microlasers dans l'ensemble. Comme on peut partir d'une plaquette de plusieurs centimètres de diamètre et qu'un seul millimètre carré de section suffit à réaliser un microlaser, il est possible de réaliser, en un seul cycle d'opérations techniques, plusieurs dizaines ou centaines de microlasers.

Le coût de ces composants tombe ainsi à une valeur très basse.

Les lasers fonctionnant avec un faisceau de pompage continu émettent un faisceau de lumière continu. Cependant, l'un des avantages des lasers solides pompés par des diodes laser et qu'ils utilisent des matériaux amplificateurs dont la durée de vie radiative est relativement longue (de 100 µs à 10 ms) comparativement aux durées de vie impliquées dans les diodes laser, (qui sont de l'ordre de la nanoseconde). Il est donc possible de réaliser des lasers déclenchés capables d'émettre des impulsions lumineuses très brèves (de quelques nanosecondes à quelques dizaines de nanosecondes) en stockant l'énergie produite par le pompage optique pendant une durée de l'ordre de la durée de vie radiative du matériau et en restituant toute cette énergie durant un temps très court.

Il faut pour cela disposer d'un moyen capable d'empêcher l'effet laser de se produire, qui viderait l'énergie stockée. De tels moyens sont connus. Il peut s'agir de moyens aptes à réduire la surtension de la cavité pendant toute la durée du stockage et à rétablir la valeur de la surtension brutalement lorsqu'on veut déclencher l'impulsion laser. On parle alors de lasers déclenchés à commutation du facteur de surtension, ou, en terminologie anglosaxonne de lasers "Q-switch".

Pour réaliser une cellule de déclenchement de ce type, on peut faire appel à des absorbants saturables, à des moyens électrooptiques ou à des moyens acousto-optiques.

De tels moyens ont été largement décrits dans la littérature. On peut citer, à titre d'exemple, l'ouvrage de W. KOECHNER, intitulé "Solid-State Laser Engineering" publié par Springer-Verlag, et en particulier le chapitre intitulé "Q-Switches and External Switching Devices", pp. 402 à 448. Le paragraphe 8.1.4 intitulé "Acoustooptic Q-Switches" décrit plus spécialement une cellule acousto-optique utilisable dans un laser Nd:YAG pompé en continu. La cellule de déclenchement peut fonctionner selon plusieurs modes, soit en diffraction dite de RAMAN-NATH (lorsque la longueur d'interaction est courte ou la fréquence acoustique basse), soit en diffraction de BRAGG (dans le cas d'une longueur d'interaction plus grande ou d'une fréquence acoustique élevée).

Un autre moyen d'obtenir un laser déclenché est de laisser le laser osciller normalement mais de bloquer la sortie de l'énergie lumineuse et de libérer celle-ci brutalement en déviant le faisceau hors du résonateur. Ce mode de fonctionnement est désigné par "cavity dumping". Il peut encore utiliser des moyens acoustooptiques.

Le document précédent traite, en toute rigueur, des lasers classiques et non des microlasers. Cependant, il est apparu récemment des microlasers déclenchés, utilisant des moyens électrooptiques. Dans les comptes rendus du Congrès CLEO qui s'est tenu aux Etats-Unis en mai 1992, J.J. ZAYHOWSKI et al., ont décrit un microlaser déclenché (communication CM17 intitulée "Diode-pumped Electro-Optically Q-Switched Microchip Lasers") constitué par un microbarreau de Nd:YAG de 532 µm de long accolé à un microbarreau de $LiTaO_3$ de 904 µm de long. Des électrodes sont déposées sur les deux faces perpendiculaires à l'axe C du cristal de $LiTaO_3$, lequel axe C est lui-même perpendiculaire à l'axe général du laser. Des impulsions de 600V de durée 100 ns sont appliquées aux électrodes et l'on obtient des impulsions lumineuses déclenchées de durée inférieure à 2 ns.

La réalisation de microlasers déclenchés utilisant des cellules électrooptiques est relativement simple car il n'y a aucune condition angulaire particulier à respecter dans ce phénomène. L'effet électrooptique se produit dans la totalité du volume de cristal compris entre les électrodes, et l'interaction avec le faisceau optique traversant le cristal ne fait pas apparaître de condition d'orientation très stricte entre l'orientation du faisceau optique et celle du champ électrique créé entre les électrodes. Il suffit donc d'appliquer une tension aux électrodes pour créer un champ électrique sensiblement perpendiculaire au vecteur d'onde lumineux. C'est toujours le cas dans la pratique, en dépit d'un état de surface du cristal qui peut être médiocre. Une certaine rugosité des faces est même souhaitable dans la mesure où elle améliore l'adhésion des couches métalliques formant électrodes. Pour réaliser de tels microlasers, on peut donc se contenter de scier les microbarreaux du matériau électrooptique.

Il n'en irait certainement pas de même avec une cellule de déclenchement de type acousto-optique car, dans ce cas, des conditions angulaires strictes sont imposées entre le vecteur d'onde lumineuse et le vecteur d'onde acoustique. Par ailleurs, la phase de l'onde acoustique dans le matériau acousto-optique joue un rôle primordial, puisque c'est elle qui définit le réseau d'indice qui va créer le phénomène de diffraction.

La face sur laquelle sera plaqué le générateur d'ondes acoustiques devra donc présenter une très grande qualité et un simple sciage d'un bloc de cristal ne saurait convenir.

Par ailleurs, le générateur d'ondes acoustiques devra faire appel à un matériau piézoélectrique et le dépôt d'un tel matériau, qui doit avoir une orientation privilégiée pour garder les propriétés piézoélectriques, exige des conditions d'interface bien précises, qui ne seront pas compatibles avec celles qui sont obtenues par un sciage mécanique, fut-il de qualité.

On ne connaît donc pas de procédés satisfaisants pour réaliser des cellules de déclenchement acoustooptiques pour microlasers.

La présente invention a justement pour but de remédier à cette carence et de proposer un procédé simple pour réaliser une telle cellule. En fait, la solution de l'invention ne se limite pas au cas des microcellules pour microlasers mais peut fort bien s'appliquer au cas des cellules de déclenchement acousto-optiques de dimensions ordinaires pour lasers de dimensions ordinaires.

## Exposé de l'invention

A cette fin, l'invention préconise d'exploiter les propriétés de la gravure anisotrope, telle que celle obtenue par attaque chimique préférentielle. On sait qu'il s'agit là d'une méthode de gravure reposant sur la différence de vitesse de gravure entre différents plans cristallographiques d'un même matériau pour certains agents d'attaque.

En général, la vitesse d'attaque est très lente suivant l'un des plans cristallins (les plans de type (111) par exemple) et très rapide suivant les autres.

On obtient donc des géométries de gravure particulières qui découlent de cette propriété et dont la forme est imposée par les configurations angulaires des plans d'attaque lente et par l'orientation initiale des cristaux.

On peut appliquer ce procédé au silicium, dont les propriétés à cet égard sont bien connues. Mais des configurations tout à fait similaires peuvent être obtenues avec le germanium ou avec les semiconducteurs GaAs ou InP ou autres. Il faut simplement prendre garde, dans ce dernier cas, à la présence de deux types de plans atomiques.

Pour mettre en oeuvre une telle gravure sur de grande profondeur, il faut également disposer d'un matériau de masquage suffisamment résistant à l'agent d'attaque.

La présente invention utilise ces propriétés pour réaliser la face sur laquelle les moyens de production de l'onde acoustique seront déposés. La grande qualité de l'état de surface obtenu sur une telle face gravée permet de répondre aux exigences posées par l'utilisation des phénomènes acousto-optiques comme expliqué plus haut.

Si l'invention trouve une application privilégiée dans le domaine des microlasers, où les contraintes liées aux dimensions très réduites sont sévères, il va de soi qu'on peut aussi utiliser l'invention pour réaliser des cellules de déclenchement acousto-optiques pour tout type de laser déclenché, tels que ceux qui sont décrits dans l'ouvrage de W. KOECHNER déjà cité. (Les dimensions des cellules acousto-optiques sont indépendantes des dimensions des lasers qui leur sont associés).

La présente invention a donc pour objet un procédé de réalisation d'une cellule acousto-optique pour laser déclenché, caractérisé par le fait qu'il consiste à effectuer les opérations suivantes :

a) partir d'une pièce en matériau acousto-optique transparent à la longueur d'onde d'amplification du laser et apte à propager des ondes acoustiques, ce matériau étant cristallin et possédant des plans cristallographiques, cette pièce ayant une face avant orientée par rapport à un plan cristallographique choisi,

b) déposer sur la face avant de cette pièce un masque ayant un bord parallèle à la trace du plan cristallographique choisi sur la face avant,

c) effectuer une gravure anisotrope de la pièce à travers ce masque, cette gravure faisant apparaître, le long du bord du masque, un plan gravé correspondant au plan cristallographique choisi,

d) déposer sur ce plan gravé des moyens aptes à engendrer une onde acoustique dans le matériau,
e) enlever le masque.

La présente invention a également pour objet une cellule obtenue par ce procédé. Cette cellule comprend :

- un bloc en matériau transparent à la longueur d'onde d'amplification du laser et apte à propager des ondes acoustiques, ce bloc ayant une face gravée qui est un plan cristallographique, une face avant et une face arrière orientées par rapport à ce plan,
- des moyens aptes à engendrer une onde acoustique déposés sur la face gravée.

La présente invention a encore pour objet un procédé dans lequel on réalise une pluralité de microlasers déclenchés par des moyens acousto-optiques, autrement dit un procédé collectif. Selon l'invention, ce procédé consiste à effectuer les opérations suivantes :

A) réaliser une première plaquette amplificatrice, à partir d'un matériau apte à produire une amplification optique à une première longueur d'onde sous excitation optique à une seconde longueur d'onde, cette première plaquette ayant une face avant et une face arrière,
B) réaliser une seconde plaquette acousto-optique par les opérations suivantes :

    a) on part d'une plaquette en matériau transparent à la première longueur d'onde d'amplification et apte à propager des ondes acoustiques, ce matériau étant cristallin et possédant des plans cristallographiques, cette seconde plaquette ayant une face avant orientée par rapport à un plan cristallographique choisi,
    b) on dépose sur la face avant de la seconde plaquette un masque formé d'une matrice de motifs ayant chacun au moins un bord parallèle à la trace du plan cristallographique choisi sur la face avant,
    c) on effectue une gravure anisotrope de la seconde plaquette à travers ce masque, cette gravure faisant apparaître, entre deux motifs adjacents et le long dudit bord des motifs, un plan gravé correspondant audit plan cristallographique choisi,
    d) on dépose sur chacun de ces plans gravés des moyens aptes à engendrer une onde acoustique dans le matériau de la seconde plaquette,
    e) on enlève le masque,

C) assembler la première plaquette et la seconde plaquette en plaçant la face arrière de la seconde sur la face avant de la première,
D) former une matrice de premiers micromiroirs sur la face arrière de la première plaquette, ces premiers micromiroirs étant réfléchissants à la première longueur d'onde d'amplification et au moins en partie transparents à la seconde longueur d'onde d'excitation
E), former une matrice de seconds micromiroirs sur la face avant de la seconde plaquette, ces seconds miroirs étant réfléchissants à la première longueur d'onde d'amplification,
F) découper l'ensemble perpendiculairement aux plaquettes pour séparer les microlasers individuels.

Il va de soi que ces opérations peuvent être effectuées dans un ordre quelconque, en ce sens qu'on peut réaliser la seconde plaquette avant la première, ou inversement, ou former des matrices de miroirs sur l'une ou l'autre des plaquettes avant ou après assemblage.

Dans une variante avantageuse, on forme les miroirs sur une paroi transparente et l'on vient assembler cette paroi sur l'une des plaquettes. On peut réaliser deux telles parois avec deux matrices de micromiroirs et les assembler de part et d'autre des première et seconde plaquettes.

De préférence, pour obtenir un résonateur stable, l'un au moins des micromiroirs de chaque laser est concave. Pour obtenir une matrice de micromiroirs concaves, on peut réaliser sur une paroi transparente une matrice de microlentilles concaves et recouvrir au moins la partie concave de ces microlentilles d'une couche réfléchissante.

Deux plaques similaires peuvent être réalisées sur ce modèle, puis assemblées aux deux plaquettes, avant découpe de l'ensemble.

Dans toutes ces variantes, des couches antireflet peuvent être déposées entre les différents éléments assemblés, à savoir entre la première et la seconde plaquettes et entre chaque plaquette et la paroi de micromiroirs correspondante.

La présente invention a finalement pour objet un microlaser déclenché obtenu par ce procédé. Il est caractérisé par une cellule de déclenchement acousto-optique présentant une face gravée.

**Brève description des dessins**

- la figure 1 montre schématiquement la constitution d'un assemblage obtenu par le procédé de l'invention dans sa variante collective ;
- la figure 2 illustre une première étape de réalisation d'une plaquette acousto-optique ;
- la figure 3 montre des exemples de profils obliques pouvant être obtenus par gravure anisotrope sur plaquette d'orientation de surface (100) ;
- la figure 4 illustre un exemple de profil droit pour plaquette d'orientation de surface (110) ;
- la figure 5 montre d'autres exemples de profils obliques pouvant être obtenus par gravure anisotrope ;
- la figure 6 montre encore d'autres exemples de profils obliques pouvant être obtenus par gravure anisotrope ;
- la figure 7 montre une cellule acousto-optique avec des moyens piézoélectriques inclinés ;
- la figure 8 montre une variante où les moyens piézoélectriques sont disposés sur une face gravée à angle droit par rapport au plan de surface de la plaquette ;
- la figure 9 illustre un exemple de réalisation d'un micromiroir comportant une microlentille ;
- la figure 10 illustre une variante à microlentilles de FRESNEL ;
- la figure 11 montre en coupe les composants assemblés ;
- la figure 12 montre les lignes de découpe d'un assemblage ;
- la figure 13 illustre un exemple de microlaser à moyens de déclenchement acousto-optiques finalement obtenu selon l'invention ;
- la figure 14 illustre un premier mode de fonctionnement d'un laser à moyens de déclenchement acousto-optiques ;
- la figure 15 illustre un second mode de fonctionnement d'un laser à moyens de déclenchement acousto-optiques ;
- la figure 16 illustre un mode de fonctionnement de type "cavity dumping".

**Exposé détaillé de modes de réalisation**

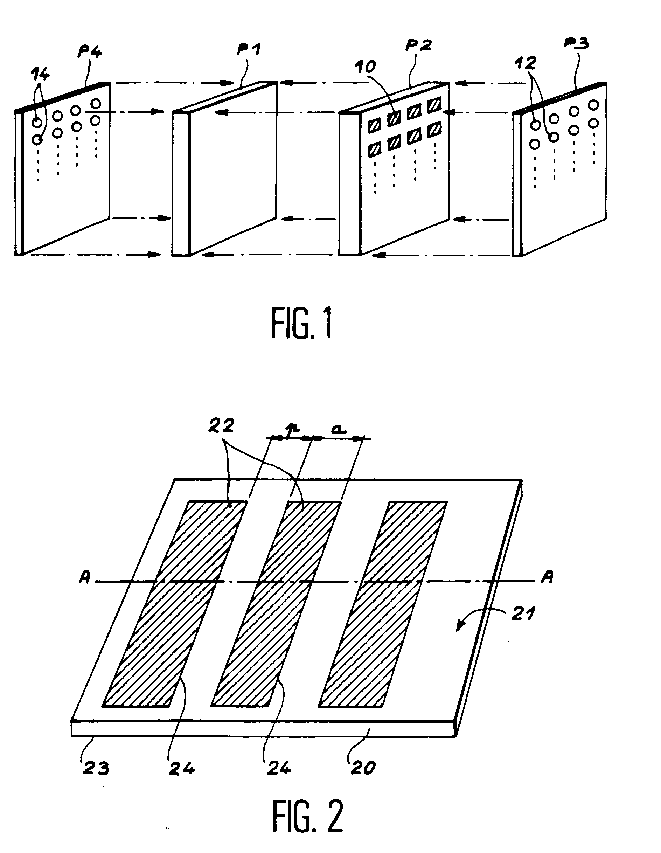

La figure 1 montre une première plaquette $P_1$ en matériau apte à produire une amplification optique sous excitation appropriée. La lumière émise par P1 représente une longueur d'onde appelée longueur d'onde d'amplification qui est fonction du matériau $P_1$ dopé. Cette plaquette peut être réalisée en tout matériau connu pour ce type d'application, par exemple en YAG dopé au Néodyme ou Erbium ou Thullium et/ou Holmium.

Cette même figure montre également une seconde plaquette P2 en matériau acousto-optique, revêtue d'une pluralité de cellules acousto-optiques de déclenchement 10 obtenues comme il sera expliqué plus loin. Cette seconde plaquette peut être en silicium, germanium, arséniure de gallium, phosphure d'indium, etc...

Par ailleurs, la figure 1 montre deux parois P3 et P4 revêtues chacune d'une matrice de micromiroirs, respectivement 12 et 14.

Dans la description qui suit, on s'attachera à décrire surtout le procédé de réalisation de la seconde plaquette P2 et accessoirement des parois P3 et P4, sachant que la première plaquette P1 est, en soi, classique.

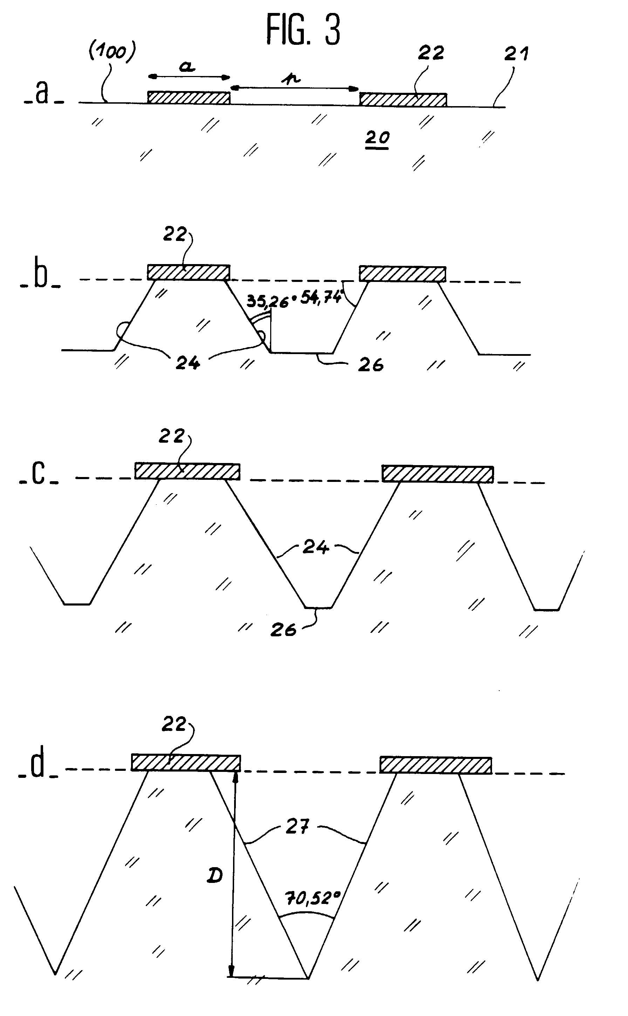

Différents modes de réalisation de la plaquette P2 sont illustrés sur les figures 2 à 8.

La figure 2, tout d'abord, montre une plaquette 20, en matériau cristallin convenablement orienté, avec une face avant 21 et une face arrière 23. Ce matériau possède des plans cristallographiques. L'un de ces plans coupe la face avant 21 selon une certaine direction. Sur la face avant 21, on dépose alors un masque formé d'une matrice de motifs 22, ayant au moins un bord 24 parallèle à la direction selon laquelle le plan cristallographique choisi coupe la face avant 21.

Sur la figure 2, ces motifs sont des bandes rectangulaires de largeur $\underline{a}$, séparées d'une distance p.

La figure 3 (a, b, c, d) montre, en coupe, plusieurs étapes dans la gravure de la plaquette 20, dans le cas où cette plaquette est en silicium avec une face avant 21 orientée selon le plan cristallographique (100). Dans ce cas, le masque peut être par exemple en silice $SiO_2$ ou en nitrure de silicium $Si_3N_4$.

La partie (a) de la figure 3 est une coupe de la plaquette avec les motifs 22 du masque.

Après un certain temps d'attaque (partie b) (telle qu'une attaque chimique préférentielle utilisant par exemple un mélange d'une base et d'un alcool (KOH-méthanol, ou similaire)), le plan (100) horizontal (ou de surface) a été gravé beaucoup plus profondément que les plans de type (111). Les plans de type (111) sont définis par les plans (111) et ($1\bar{1}1$) qui sont situés indifféremment de part et d'autre de la normale au plan de surface. Ces plans sont orientés obliquement et référencés 24. Les angles entre ces différents plans et le plan de surface sont de 54,74°. L'angle des plans 24 par rapport à la normale à la plaquette est de 35,26°.

Après un temps d'attaque encore plus long, le fond 26 s'amenuise encore (partie c).

Après un certain temps, le fond a disparu. Les deux plans (111) et ($1\bar{1}1$) se rejoignent et forment un profil en V référencé 27 faisant un angle de 70,52°.

La profondeur D évolue ensuite lentement, car la vitesse d'attaque des plans de type (111) est très faible (mais non nulle).

Deux remarques doivent être faites à propos d'un tel processus :

1) l'attaque chimique se produit également sous le masque 22 et l'on assiste à un retrait régulier du plateau défini par le masque dont la largeur initiale est a. Au bout d'un temps suffisamment long, le masque 22 repose sur une languette de cristal de plus en plus étroite (formation d'un champignon) et il peut se détacher.

2) Le fond 26 de la gravure, qui correspond à une attaque rapide du plan de surface, est de mauvaise qualité optique et ne pourra pas servir de miroir dans l'invention. Au contraire, les plans d'attaque lente (111) et ($1\bar{1}1$) sont d'excellente qualité et serviront de support à des moyens piézoélectriques.

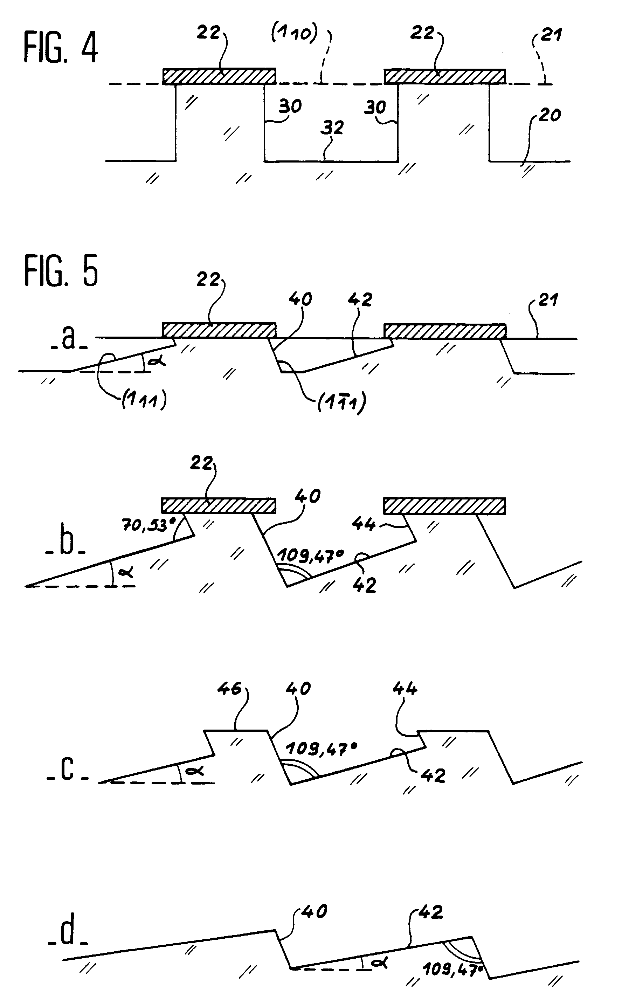

Sur la figure 4 ensuite, on voit une plaquette 20 dont la face avant 20 correspond à un plan (110). Le plan d'attaque lents sont toujours les plans du type (111). Les plans ($1\bar{1}1$) de ce type sont les plans référencés 30 et sont perpendiculaires au plan de surface. Le fond de gravure est noté 32.

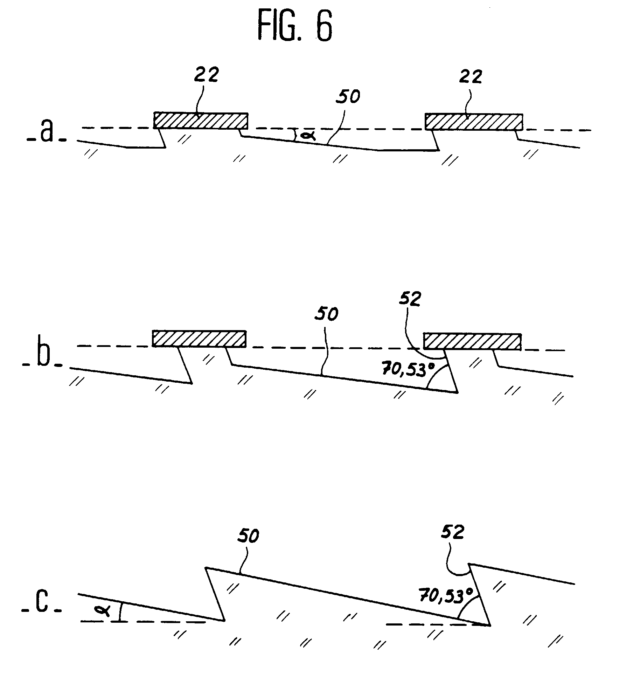

Un autre cas particulièrement intéressant est celui d'un cristal dont la face avant fait un angle $\alpha$ par rapport au plan (111). Suivant que l'angle $\alpha$ est positif (en direction du plan 010) ou négatif par rapport à ce plan (010), on obtient diverses géométries de gravure illustrées respectivement sur les figures 5 et 6 :

a) Cas où l'angle $\alpha$ est positif :

La partie (a) de la figure 5 montre la formation de plans d'attaque lente 40 ($1\bar{1}1$) et 42 (111). Le plan 42 fait un angle $\alpha$ avec la face avant. Les faces inclinées forment finalement un angle de 109,47° (partie b) avec apparition d'une sous-gravure 44.

Le masque enlevé, on obtient le profil de la partie (c) avec un plateau 46.

Si l'attaque était poursuivie et si le masque ne se détachait pas, on finirait par obtenir la géométrie de la partie (d). En pratique, cependant, on arrêtera l'attaque avant disparition de la languette de soutien.

b) Cas où l'angle $\alpha$ est négatif

L'angle $\alpha$ correspond cette fois à une découpe à partir des plans de type(111) en direction opposée des plans (010) comme illustré sur la figure 6, partie a.

Après un certain temps de gravure, on obtient des plans 50 (111) et 52 ($1\bar{1}1$) faisant un angle de 70,53° (partie b). A l'extrême, on obtiendrait les dents de scie comme sur la partie c.

Il est clair que la géométrie des gravures obtenues dépend de l'angle $\alpha$ et de l'écartement p entre les deux motifs du masque et du temps d'attaque. Si $\alpha=0$, les deux géométries décrites plus haut sur les figures 5 et 6 deviennent identiques : la profondeur de gravure est alors donnée par le temps d'attaque sur les plans de type (111) pour lesquels la vitesse est la plus lente ; il faudra donc des temps d'attaque importants pour atteindre des profondeurs importantes.

La géométrie des languettes dépend, elle, du rapport des vitesses entre les plans d'attaque lente de type (111) et les autres plans attaqués rapidement.

De façon connue, les cellules acousto-optiques fonctionnent suivant deux types de régimes :

- le régime de BRAGG dans lequel les dimensions du faisceau acoustique doivent être grandes par rapport à la longueur d'onde acoustique et dans lequel on peut définir un vecteur d'onde acoustique et
- le régime de RAMAN-NATH dans lequel l'onde acoustique est fortement diffractée, autrement dit dans lequel les dimensions du faisceau acoustique sont faibles par rapport à la longueur d'onde acoustique.

Ceci implique que dans le régime de RAMAN-NATH, il peut y avoir diffraction de l'onde lumineuse par l'onde acoustique sans qu'aucune condition angulaire stricte entre la direction moyenne de propagation de l'onde acoustique et la direction de propagation de l'onde optique ne soit respectée. Au contraire, en régime de BRAGG, l'interaction ne peut avoir lieu que lorsque ces deux ondes font un angle $\frac{\pi}{2}$ - $\theta_B$ bien défini, $\theta_B$ étant l'angle de BRAGG.

Ainsi, dans l'invention, en régime de RAMAN-NATH, l'angle $\alpha$ peut être quelconque et en particulier nul alors qu'en régime de BRAGG, l'angle $\alpha$ est choisi en fonction de l'angle $\theta_B$ désiré et dépend également de l'angle $\beta$ entre les plans (111) et ($1\bar{1}1$). La relation entre $\alpha$, $\beta$ et $\theta_B$ est la suivante :

$$\alpha = \frac{\pi}{2} + \theta_B - \beta$$

L'angle $\theta_B$ correspond à l'angle formé par le plan cristallographique sur lequel est déposé la cellule de BRAGG et la normale au plan de surface. L'angle $\theta_B$ dépend de la fréquence des ondes acoustiques. En pratique, pour limiter les problèmes de dissipation de puissance et d'atténuation des ondes acoustiques, on travaille de façon préférentielle avec des fréquences inférieures au GHz et donc avec un angle $\theta_B$ tel que $0 < \theta_B < 10°$. La configuration pour laquelle β=70,53° (voir figure 1) est donc la plus avantageuse.

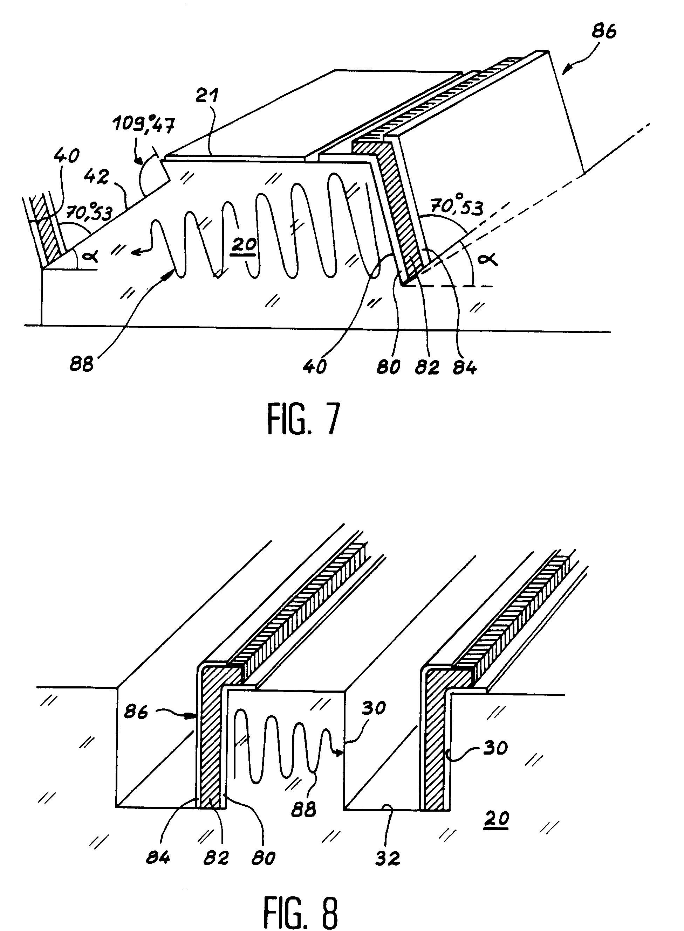

La figure 7 montre comment l'on réalise les moyens piézoélectriques aptes à engendrer une onde acoustique à partir d'un profil gravé comme il vient d'être expliqué. Le profil représenté correspond au cas illustré sur la figure 6, partie c. Un plan incliné 40 est obtenu qui fait un angle de 70,53° avec le plan incliné adjacent 42, lequel fait un angle α avec le plan parallèle à la plaquette.

Les moyens déposés sur le plan 40 comprennent une première électrode 80, une couche piézoélectrique 82, une seconde électrode 84. L'ensemble 86 de ces trois couches est capable d'engendrer une onde acoustique représentée schématiquement par la référence 88 dans le matériau cristallin.

Dans l'exemple illustré, cette onde acoustique 88 sera dirigée vers la gauche et légèrement vers le bas, autrement dit légèrement en biais.

Les dépôts 80, 82, 84 interviennent naturellement sur tous les plans gravés 40 réalisés collectivement, la figure 7 n'en représentant qu'un seul.

La figure 8 montre ces mêmes moyens piézoélectriques 86 dans la variante où la gravure a dégagé des plans 30 perpendiculaires à la face avant de la plaquette. Cette variante correspond à la figure 4 précédente. On retrouve, dans les moyens 86, la première électrode 80, la couche piézoélectrique 82 et la seconde électrode 84. Dans ce cas, on doit forcément utiliser une diffraction de type RAMAN-NATH.

A ce stade du procédé de réalisation, on peut déposer sur les première et seconde plaquettes P1 et P2 des couches réfléchissantes pour former les micromiroirs des futurs microlasers. Mais on peut également former ces micromiroirs indépendamment des plaquettes et les rapporter ensuite sur celles-ci. De préférence encore, on forme des microlentilles pour diminuer les pertes et améliorer la stabilité optique. On sait, en effet, qu'un résonateur optique formé par deux miroirs plans se faisant face, n'est pas stable, c'est-à-dire que les rayons lumineux qui vont et viennent de l'un à l'autre finissent par s'écarter indéfiniment de l'axe. La stabilité est obtenue en donnant à l'un au moins des miroirs une courbure concave. La convergence ainsi obtenue a pour effet de ramener les faisceaux lumineux vers l'axe. Cette convergence peut aussi s'obtenir au moyen de microlentilles convergentes disposées aux extrémités du résonateur. Les variantes qui vont être décrites appliquent ces méthodes de stabilisation.

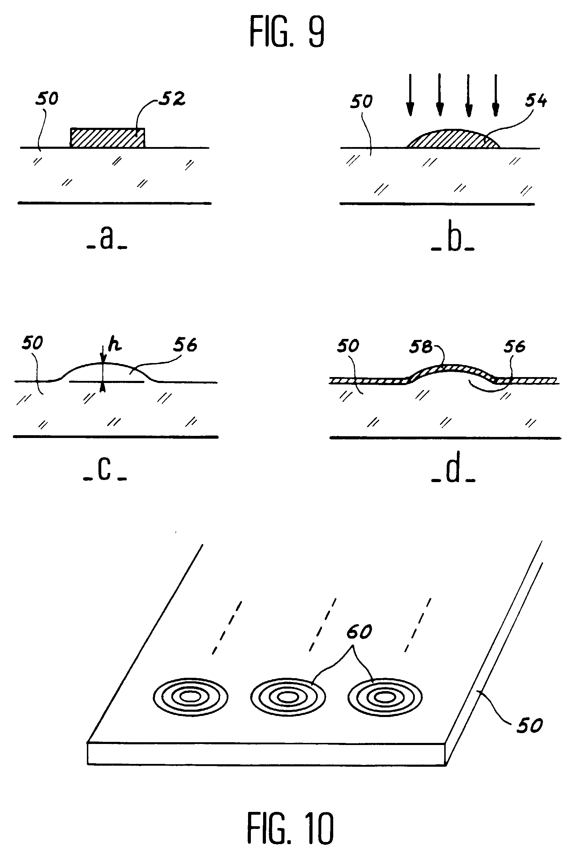

Sur la figure 9 tout d'abord, on voit une paroi transparente 50 sur laquelle est déposée une couche de matériau photosensible déformable, gravée sous forme de plots 52 (partie a de la figure 6). Ces plots ont une forme quelconque carrée, circulaire ou elliptique. Ces plots sont chauffés et, par fluage, ils prennent la forme lenticulaire 54 illustrée sur la partie (b).

On effectue ensuite une gravure de la paroi 50 (gravure sèche ou humide) à travers les masques 54 ce qui laisse subsister des microlentilles 56 d'épaisseur h (partie c). Pour des rayons de courbure de 1 mm à 10 mm et pour des diamètres de lentilles de 100 à 500 µm, la hauteur h est comprise entre environ 0,1 µm et 30 µm.

Ces microlentilles sont revêtues d'une couche réfléchissante 58 à la longueur d'onde d'amplification (partie d de la figure 9). Cette couche réfléchissante peut être gravée de façon à ne recouvrir que la partie concave de la lentille, ou recouvrir de façon continue l'ensemble des lentilles.

Dans une autre variante illustrée sur la figure 10, les microlentilles sont des microlentilles de FRESNEL 60 formées sur une paroi 50 grâce à des techniques classiques.

Ces opérations de formation de microlentilles peuvent être mises en oeuvre non seulement sur des parois transparentes indépendantes telles que 50 mais aussi directement sur les première et seconde plaquettes P1 et P2, si les matériaux utilisés pour constituer celles-ci (matériaux amplificateurs et acousto-optiques) le permettent.

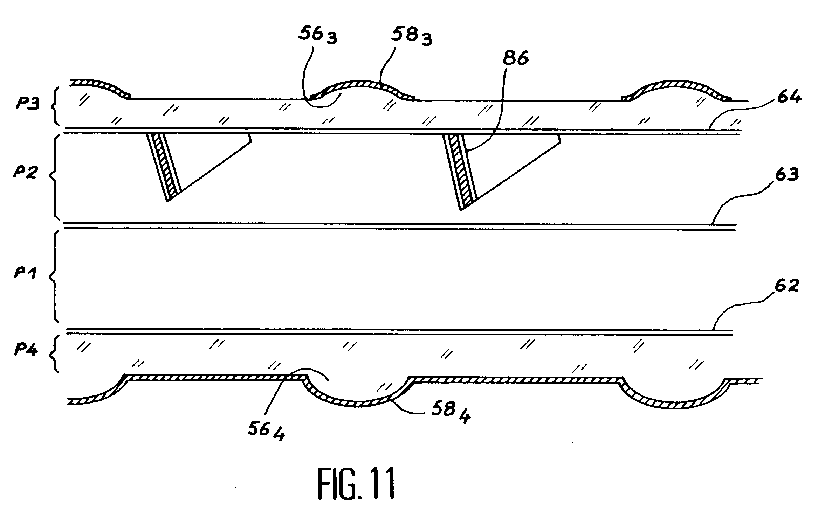

Dans le cas où les microlentilles et les micromiroirs sont réalisés sur des parois indépendantes rapportées ensuite sur les plaquettes P1 et P2, on obtient finalement une structure telle que représentée en coupe sur la figure 11. On y trouve la plaquette amplificatrice P1, la plaquette acousto-optique P2 et les parois P3 et P4 recouvertes de microlentilles $(56)_3$, $(56)_4$ avec leurs miroirs $(58)_3$, $(58)_4$.

Entre tous ces composants peuvent être intercalées des couches antireflet 62, 63, 64.

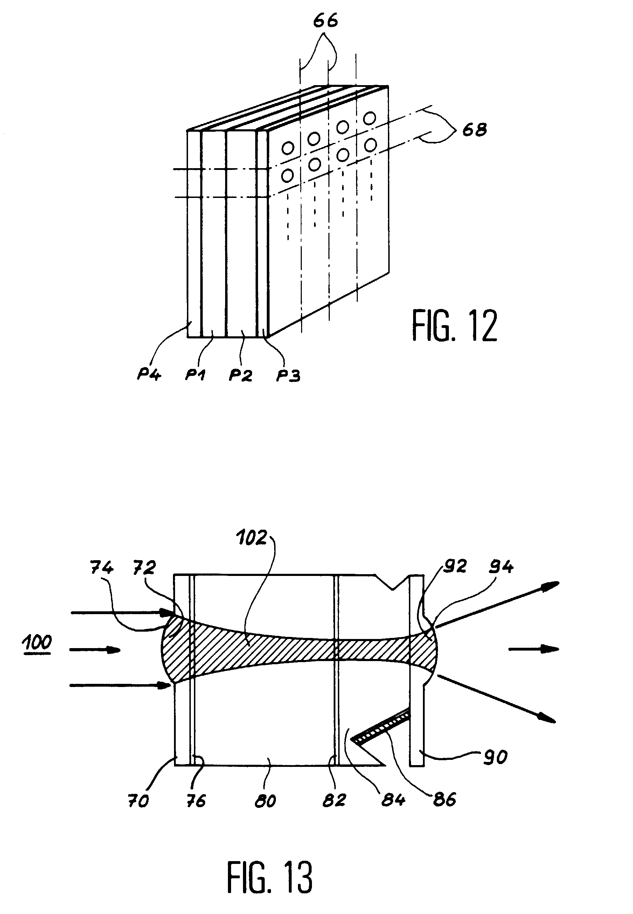

La figure 12 montre l'assemblage en perspective, avec des lignes de découpe 66 et 68.

La découpe fait apparaître les microlasers individuels. Un tel microlaser est représenté en coupe sur la figure 13. Il comprend successivement une paroi d'entrée 70 avec une lentille d'entrée 72 recouverte d'une couche 74 réfléchissante à la longueur d'onde d'émission du microlaser mais transparente à la longueur d'onde d'excitation, une première couche antireflet 76, un bloc amplificateur 80, une seconde couche antireflet 82, une cellule acousto-optique 84 avec ses moyens piézoélectriques 86, une paroi de sortie 90 avec une microlentille 92 et un miroir 94.

Le faisceau d'excitation (ou de pompage) est référencé 100. Il provient d'une source non représentée (par exemple une diode). A l'intérieur du microlaser, entre les deux miroirs, s'établit le faisceau laser proprement dit, référencé 102, avec sa forme caractéristique évasée à proximité des miroirs et cintrée vers le centre et en particulier dans la zone où se développe l'effet acousto-optique qui va produire le déclenchement et permettre la formation de l'impulsion optique de sortie.

Les microlasers obtenus par le procédé qui vient d'être décrit peuvent fonctionner selon l'un quelconque des modes de déclenchement connus : commutation de surtension ("Q-switch"), vidage de cavité ("cavity dumping"), etc...

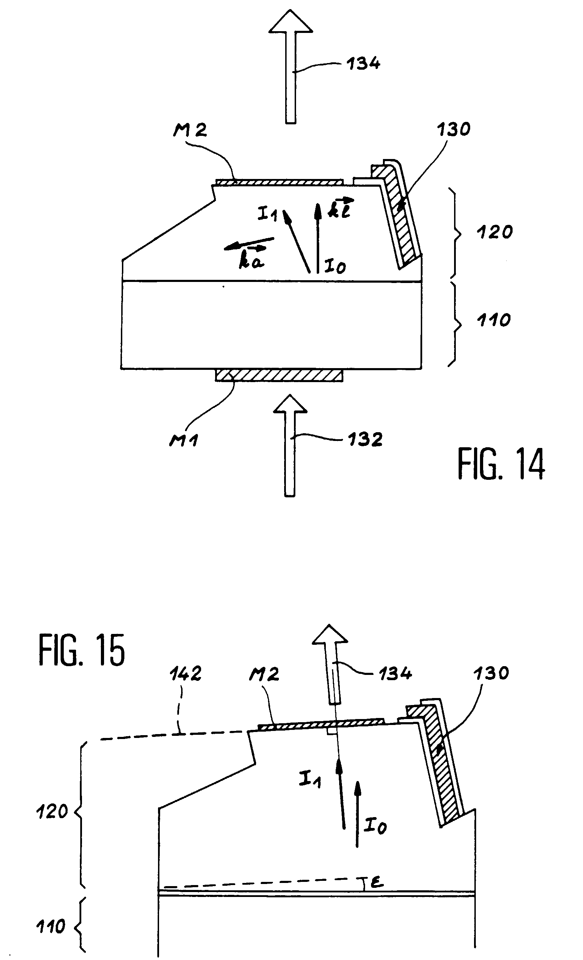

La figure 14 illustre le mode de fonctionnement en "Q-switch". Sur cette figure, le microlaser comprend un bloc amplificateur 110, une cellule de déclenchement 120 avec ses moyens piézoélectriques 130 pour engendrer une onde acoustique, deux miroirs M1, M2 (représentés schématiquement, sans leur éventuelle courbure). Le faisceau optique de pompage est référencé 132. A l'intérieur du résonateur et en l'absence d'onde acoustique, le faisceau lumineux possède une intensité $I_0$ et présente un vecteur de propagation $\overline{k}_\ell$. Ce faisceau est alors perpendiculaire aux miroirs M1 et M2.

L'excitation des moyens piézoélectriques 130 provoque l'apparition d'une onde acoustique dans la cellule 120 avec un vecteur de propagation $\overline{k}_\alpha$ qui présente un angle de $\pi/2$-$\theta_B$ avec le vecteur $\overline{k}_\ell$ en régime de BRAGG. Il en résulte une diffraction de l'onde lumineuse, qui donne naissance à un faisceau lumineux diffracté d'intensité $I_1$. Le vecteur de propagation $\overline{k}_\ell$ de l'onde lumineuse bascule donc d'un certain angle, et il n'est plus perpendiculaire au miroir M2. L'oscillation laser est donc empêchée par l'onde acoustique. Cela peut correspondre à la phase de stockage de l'énergie sur le niveau supérieur de la transition laser. Le déclenchement sera alors obtenu en supprimant l'onde acoustique. Le faisceau déclenché est référencé 134.

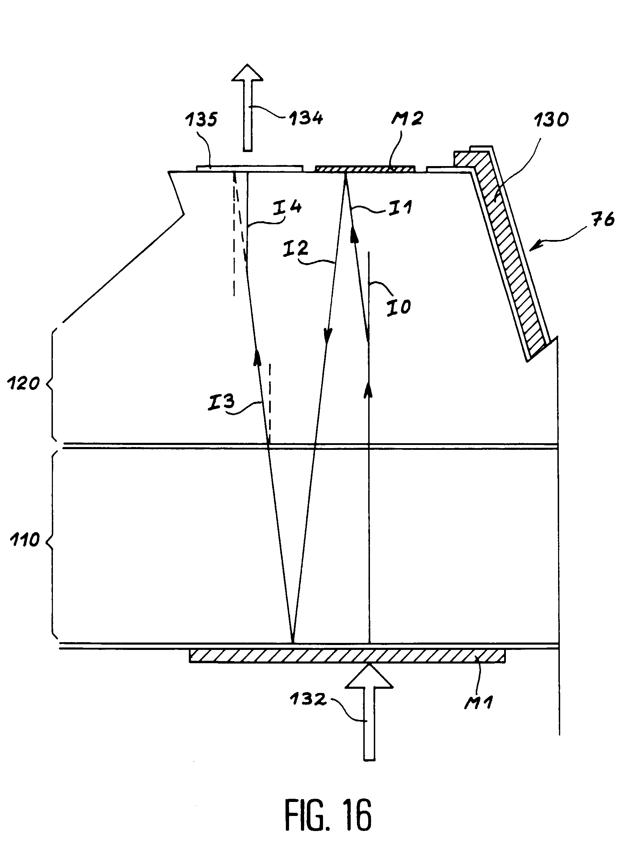

Sur la figure 15 (toujours en mode de fonctionnement en "Q switch"), le microlaser représenté a été obtenu en partant d'une seconde plaquette dont la face arrière 142 n'était pas parallèle à la face avant 142 mais faisait un angle ε. Cet angle est choisi pour que, en présence d'ondes acoustiques, le faisceau lumineux diffracté d'intensité $I_1$ soit perpendiculaire au miroir M2. Cet angle ε est généralement compris entre 0 et 5°. La période de stockage d'énergie se produit donc, à l'inverse du cas précédent, en l'absence d'onde acoustique et le déclenchement est obtenu en commandant les moyens piézoélectriques 130.

Dans la variante de la figure 16, en l'absence d'ondes acoustiques, le laser oscille mais l'énergie est confinée dans le résonateur formé par les deux miroirs M1 et M2, (éventuellement associés à des lentilles non représentées), lesquels sont tous deux hautement réfléchissants. En présence d'une onde acoustique, le faisceau lumineux est défléchi $I_1$ et, après une ou plusieurs réflexions $I_2$, il vient frapper la face avant du microlaser en une zone située à côté du miroir M2. Le faisceau lumineux peut donc s'échapper de la cavité. Il s'en échappera d'autant mieux qu'on aura disposé une couche antireflet 135 à côté du miroir M2. Ce mode de fonctionnement correspond donc au mode dit "cavity dumping". Ce cas est surtout utilisable pour des longueurs de cavité laser (milieu amplificateur) grandes conduisant à une durée de vie importante des photons dans la cavité.

Le fonctionnement déclenché des microlasers obtenus selon le procédé de l'invention repose essentiellement sur la cellule acousto-optique. Pour choisir convenablement le matériau devant constituer cette cellule, on peut s'aider des considérations suivantes.

On considère seulement le cas des ondes de volume engendrées par une électrode de longueur L et de largeur H. Si L et H sont grands devant la longueur d'onde acoustique $\lambda_\alpha$, on peut considérer que la diffraction de l'onde acoustique est négligeable et que cette onde se propage suivant un parallélépipède de section LH.

Pour simplifier, on peut ne considérer que des directions de propagation particulières des ondes acoustiques et optiques.

On définit classiquement plusieurs coefficients ou paramètres aptes à décrire le fonctionnement d'un matériau acousto-optique. On peut définir tout d'abord un coefficient de mérite, noté $m_2$ , qui représente la capacité du matériau acousto-optique à diffracter la lumière à puissance acoustique donnée. Il est donc directement lié à la variation d'indice engendrée dans les directions d'interaction considérées.

Le coefficient $m_2$ est donné par une relation de la forme

$$m_2 = \frac{n^6 p^2}{\rho v_\alpha^3}$$

où n est l'indice, p un coefficient acousto-optique, ρ la densité du matériau, $v_\alpha$ la vitesse acoustique.

On peut calculer ainsi la variation d'indice Δn obtenue dans le matériau acousto-optique. On a

$$\Delta_n = \sqrt{\frac{Pa}{2}} \ m_2 \frac{1}{LH}$$

où Pa est la puissance acoustique.

On peut enfin définir un troisième paramètre, noté ξ, et qui définit la force de l'interaction acousto-optique :

$$\xi = -\frac{k_0}{\cos\theta_0} \sqrt{m_2} \sqrt{\frac{PaL}{2H}}$$

où $\theta_0$ est l'angle que fait la direction de l'onde lumineuse avec la perpendiculaire à la direction de l'onde acoustique et où $k_0 = \frac{2\pi}{\lambda_0}$ est l'amplitude du vecteur d'onde lumineux.

On utilisera ces quelques relations avec une puissance acoustique Pa de 1 Watt pour normaliser les résultats.

On prendra pour $m_2$ les valeurs données dans la littérature pour un matériau donné et une configuration donnée (c'est-à-dire : direction de l'onde acoustique, direction de l'onde optique, type d'ondes acoustiques excitées, etc...).

Le paramètre $\xi$ détermine l'intensité du faisceau diffracté selon le régime utilisé. En régime de RAMAN-NATH, on a où $I_q = J_q^2 (\xi)$ où q est l'ordre de diffraction et $J_q$ la fonction de BESSEL d'ordre n. En régime de BRAGG, on a $I_1 = \sin^2 (\xi/2)$.

On s'en tient, par la suite, à des matériaux qui répondent aux caractéristiques suivantes :

- les matériaux doivent être usinables sur de fortes épaisseurs (plusieurs centaines de microns) avec des méthodes convenables assurant une qualité de surface excellente ; c'est en particulier le cas des techniques d'attaque anisotrope ;
- ces matériaux doivent présenter de faibles pertes acoustiques à haute fréquence (50 dB/(cmGHz$^2$) apparaît être une limite supérieure : cela correspond à environ 1 dB de pertes sur 1 mm de propagation à 500 MHz, qui sera l'ordre de grandeur des fréquences acoustiques utilisées) ;
- la transparence doit être convenable pour des longueurs d'onde d'émission des microlasers, idéalement une transparence au-delà de 0,9 à 1 μm en longueur d'onde est recherchée ; cependant, beaucoup d'applications vers 1,5 μm et entre 2 et 3 μm sont actuellement visées.

Les matériaux remplissant ces conditions sont notamment le silicium Si, le germanium Ge, l'arséniure de gallium GaAs, le phosphure d'indium InP et le phosphure de gallium GaP. Ils sont tous disponibles en surface et en qualité convenables et peuvent s'usiner chimiquement avec des solutions d'attaque connues et avec des vitesses d'attaque fortement dépendantes des plans cristallins.

Les caractéristiques acoustiques de ces matériaux sont résumées dans le tableau 1.

Dans ce tableau, les conditions de calcul du coefficient $m_2$ sont données par type d'onde acoustique. L'onde acoustique est supposée longitudinale (L) par rapport à certains plans cristallographiques indiqués entre parenthèse.

Tableau I

| matériaux | domaine de transparence ($\mu m$) | largeur d'onde ($\mu m$) | onde acoustique | Vitesse m/s | pertes acoustiques dB/ cm.GHz$_2$ | densité kg/m$^3$ | indice de réfraction | m$_2$ 10$^{-15}$s$^3$kg$^{-1}$ |
|---|---|---|---|---|---|---|---|---|
| Si | 1,2 - 11 | 10,6 | L - [111] | 9850 | 6,5 | 2330 | 3,42 | 6,2 |
| GaP | 0,6 - 10 | 0,633 | L - [110] | 6320 | 6 | 4130 | 3,31 | 44,6 |
| Ge | 2 - 20 | 10,6 | L - [111] | 5500 | 30 | 5330 | 4,00 | 840 |
| GaAs | 0,9 - 11 | 1,15 | L - [110] | 5150 | 30 | 5340 | 3,37 | 104 |
| InP | 1 - 10 $\mu m$ | 1,15 | L - [110] | 5120 | 30 | 5340 | 3,37 | 100 |

Le tableau II donne les valeurs des écarts d'indice $\Delta_n$ en fonction de la longueur L d'interaction, à puissance acoustique Pa donnée (égale à 1 W) et à hauteur H donnée (égale à 1000 $\mu m$), et cela pour trois matériaux, le silicium, le germanium et l'arséniure de gallium.

Tableau II

|  |  | L = 100 $\mu m$ | L = 500 $\mu m$ | L = 1000 $\mu m$ |
|---|---|---|---|---|
| Si | $\Delta n$ | $1,8.10^{-4}$ | $8.10^{-5}$ | $5,6.10^{-5}$ |
| $m_2 = 6,2.10^{-15}\ s^3\ kg^{-1}$ | $\Delta nL$ | $1,8.10^{-8}m^{-1}$ | $4.10^{-8}m^{-1}$ | $5,6.10^{-8}m^{-1}$ |
| Ge | $\Delta n$ | $2.10^{-3}$ | $9.10^{-4}$ | $6,5.10^{-4}$ |
| $m_2 = 840.10^{-15}\ s^3\ kg^{-1}$ | $\Delta nL$ | $2.10^{-7}m^{-1}$ | $4,5.10^{-7}m^{-1}$ | $6,5.10^{-7}m^{-1}$ |
| GaAs | $\Delta n$ | $0,7.10^{-3}$ | $3,2.10^{-4}$ | $2,3.10^{-4}$ |
| $m_2 = 104.10^{-15}\ s^3\ kg^{-1}$ | $\Delta nL$ | $0,7.10^{-7}m^{-1}$ | $1,6.10^{-7}m^{-1}$ | $2,3.10^{-7}m^{-1}$ |

En prenant $\cos\theta_0 = 1$, $\lambda_0 = 2$ $\mu m$, on a $k_0 = 3,14$ et les valeurs de $\xi$ pour les trois matériaux en question (toujours pour une puissance Pa de 1W et une hauteur H de 1000 $\mu m$) sont donnés dans le tableau III.

Tableau III

|  | L= 100 $\mu m$ | L= 500 $\mu m$ | L= 1000 $\mu m$ |
|---|---|---|---|
| Si | $5,65.10^{-2}$ | $12,5.10^{-2}$ | $17,6.10^{-2}$ |
| Ge | 0,63 | 1,4 | 2 |
| GaAs | 0,22 | 0,50 | 0,72 |

Si $\xi$ est faible, l'intensité diffractée dans l'ordre 1 est équivalente en régime de BRAGG et en régime de RAMAN-NATH :

$$I_1 = J_1^{\,2}(\xi) \approx \frac{\xi^2}{4}\ \text{en RAMAN-NATH,}$$

$$I_1 = \sin^2\frac{\xi}{2} \approx \frac{\xi^2}{4}\ \text{en BRAGG.}$$

On voit que le germanium et l'arséniure de gallium peuvent fonctionner dans les deux types de régime, suivant le mode opératoire choisi, car les intensités diffractées restent élevées même avec de faibles largeurs d'interaction.

Le silicium va cependant poser quelques problèmes et ne pourra être utilisé que pour induire des pertes supplémentaires dans la cavité et permettre un fonctionnement en "Q-switch". Le fonctionnement en "cavity dumping", qui suppose toute l'énergie dans l'ordre diffracté, va demander des épaisseurs de matériau ou des puissances de commande élevées.

Le tableau IV donne le rapport $\frac{I_1}{I_0}$ des intensités dans l'ordre 1 diffracté et dans l'ordre 0 non diffracté.

Tableau IV

|  | L= 100 $\mu m$ | L= 500 $\mu m$ | L= 1000 $\mu m$ |
|---|---|---|---|
| Si | $8.10^{-5}$ | $3,9.10^{-3}$ | $7,7.10^{-2}$ |
| Ge | 0,1 | 0,30 (RAMAN-NATH) RN<br>0,42 (BRAGG) B | 0,33<br>0,71 |
| GaAs | $1,2.10^{-2}$ | $6,25.10^{-2}$ | 0,12<br>0,124 |

**Revendications**

1. Procédé de réalisation d'une cellule acousto-optique pour laser déclenché, caractérisé par le fait qu'il consiste à effectuer les opérations suivantes :

   a) partir d'une pièce (20) en matériau acousto-optique transparent à la longueur d'onde d'amplification du laser et apte à propager des ondes acoustiques, ce matériau étant cristallin et possédant des plans cristallographiques, cette pièce ayant une face avant (21) orientée par rapport à un plan cristallographique choisi,
   b) déposer sur la face avant (21) de cette pièce un masque (22) ayant un bord (24) parallèle à la trace du plan cristallographique choisi sur la face avant (21),
   c) effectuer une gravure anisotrope de la pièce à travers ce masque (22), cette gravure faisant apparaître, le long du bord du masque, un plan gravé (24, 30, 42) correspondant au plan cristallographique choisi,
   d) déposer sur ce plan gravé (24, 30, 42) des moyens (86) aptes à engendrer une onde acoustique (88) dans le matériau,
   e) enlever le masque.

2. Procédé selon la revendication 1, caractérisé par le fait que le plan cristallographique choisi pour constituer le plan gravé fait un angle aigu avec la direction normale à la face avant de la pièce en matériau acousto-optique.

3. Procédé selon la revendication 1, caractérisé par le fait que le plan cristallographique choisi pour constituer le plan gravé est perpendiculaire à la face avant de la pièce en matériau acousto-optique.

4. Procédé selon la revendication 2 ou 3, caractérisé par le fait que le plan cristallographique choisi pour le plan gravé est de type (111).

5. Procédé selon la revendication 1, caractérisé par le fait qu'on réalise une pièce en matériau acousto-optique avec une face arrière qui fait un angle aigu avec la face avant.

6. Procédé selon la revendication 1, caractérisé par le fait que pour réaliser sur le plan gravé les moyens (86) d'excitation d'une onde acoustique, on dépose une première électrode (80) sur le plan gravé (40), on dépose ensuite une couche d'un matériau piézoélectrique (82), on dépose ensuite une seconde électrode (84) sur la couche de matériau piézoélectrique.

7. Procédé selon la revendication 1, caractérisé par le fait que l'on réalise une microcellule pour un microlaser déclenché.

8. Cellule acousto-optique pour laser déclenché obtenue par le procédé selon l'une quelconque des revendications 1 à 7, caractérisé par le fait qu'elle comprend :

   - un bloc en matériau transparent à la longueur d'onde d'amplification du laser et apte à propager des ondes acoustiques, ce bloc ayant une face gravée (24, 30, 40) qui est un plan cristallographique, une face avant (21) et une face arrière (23), orientées par rapport à ce plan,
   - des moyens (86) aptes à engendrer une onde acoustique (88) déposés sur la face gravée (24, 30, 40).

9. Procédé de réalisation collective de microlasers à moyens de déclenchement acousto-optiques, caractérisé par le fait qu'il consiste à effectuer les opérations suivantes dans un ordre quelconque :

   A) réaliser une première plaquette amplificatrice (P1), à partir d'un matériau apte à produire une amplification optique à une première longueur d'onde sous excitation optique à une seconde longueur d'onde, cette première plaquette ayant une face avant et une face arrière,
   B) réaliser une seconde plaquette acousto-optique (P2) par les opérations suivantes :

   a) on part d'une plaquette (20) en matériau transparent à la première longueur d'onde d'amplification et apte à propager des ondes acoustiques, ce matériau étant cristallin et possédant des plans cristallographiques, cette seconde plaquette ayant une face avant (21) orientée par rapport à un plan cristallographique choisi,
   b) on dépose sur la face avant (21) de la seconde plaquette (20) un masque formé d'une pluralité de motifs (22) ayant chacun au moins un bord (24) parallèle à la trace du plan cristallographique choisi sur la face avant (21),

c) on effectue une gravure anisotrope de la seconde plaquette à travers ce masque (22), cette gravure faisant apparaître, entre deux motifs adjacents et le long dudit bord des motif, un plan gravé correspondant audit plan cristallographique choisi,

d) on dépose sur chacun de ces plans gravés (24, 30, 40) des moyens (86) aptes à engendrer une onde acoustique dans le matériau de la seconde plaquette,

e) on enlève le masque (22),

C) assembler la première plaquette (P1) et la seconde plaquette (P2) en plaçant la face arrière de la seconde sur la face avant de la première,

D) former une matrice de premiers micromiroirs ($58_4$) sur la face arrière de la première plaquette, ces premiers micromiroirs étant réfléchissants à la première longueur d'onde d'amplification et au moins en partie transparents à la seconde longueur d'onde d'excitation,

E) former une matrice de seconds micromiroirs ($58_3$) sur la face avant de la seconde plaquette, ces seconds miroirs étant réfléchissants à la première longueur d'onde d'amplification,

F) découper l'ensemble perpendiculairement aux plaquettes pour séparer les microlasers individuels.

10. Procédé selon la revendication 11, caractérisé par le fait que le plan cristallographique choisi pour constituer les plans gravés fait un angle aigu avec la direction normale à la face avant de la seconde plaquette.

11. Procédé selon la revendication 9 ou 10, caractérisé par le fait que le plan cristallographique choisi pour les plans gravés est de type (111).

12. Procédé selon la revendication 9, caractérisé par le fait que le plan cristallographique choisi pour constituer les plans gravés est perpendiculaire à la face avant de la seconde plaquette.

13. Procédé selon la revendication 9, caractérisé par le fait qu'on réalise la seconde plaquette avec une face arrière qui fait un angle aigu avec la face avant.

14. Procédé selon la revendication 9, caractérisé par le fait que pour réaliser sur les plans gravés les moyens (86) d'excitation d'une onde acoustique, on dépose une première électrode (80) sur chaque plan gravé (40), on dépose ensuite une couche d'un matériau piézoélectrique (82), on dépose ensuite une seconde électrode (84) sur la couche de matériau piézoélectrique (82).

15. Procédé selon la revendication 9, caractérisé par le fait que, lors de l'assemblage des plaquettes, on intercale entre la première et la seconde plaquettes une couche antireflet (63).

16. Procédé selon la revendication 9, caractérisé par le fait que, pour former une matrice de micromiroirs sur l'une des plaquettes :

- on réalise une paroi transparente (50),
- on forme sur l'une des faces de cette paroi une matrice de micromiroirs (58),
- on rapporte la paroi (50) avec sa matrice de micromiroirs sur la plaquette.

17. Procédé selon la revendication 9, caractérisé par le fait que chaque micromiroir (58) de la matrice de premiers micromiroirs et/ou de la matrice de seconds micromiroirs est concave.

18. Procédé selon la revendication 16, caractérisé par le fait que la réalisation de la matrice de micromiroirs consiste à revêtir la paroi d'une matrice de microlentilles (56), et à recouvrir ces microlentilles d'une couche réfléchissante (58) à la première longueur d'onde d'amplification.

19. Procédé selon la revendication 16, caractérisé par le fait que la réalisation de la matrice de micromiroirs consiste à déposer sur la paroi (50) une matrice de microlentilles de FRESNEL (60) et à recouvrir ces lentilles d'une couche réfléchissante à la première longueur d'onde d'amplification.

20. Microlaser déclenché obtenu par le procédé selon l'une quelconque des revendications 9 à 19, caractérisé par le fait que qu'il comprend un microbarreau amplificateur (80) assemblé à une microcellule de déclenchement acousto-optique (82), cette microcellule comprenant une face gravée (40) recouverte de moyens (86) aptes à engendrer

**EP 0 620 470 B1**

une onde acoustique, deux micromiroirs (74, 94) encadrant l'assemblage microbarreau-microcellule (80, 84).

## Claims

1. Process for the production of an acoustooptical cell for a switched laser, characterized in that it comprises performing the following operations:

   a) starting with an acoustooptical material part (20) transparent to the amplification wavelength of the laser and able to propagate acoustic waves, said material being crystalline and having cristallographic planes, said part having a front face (21) oriented with respect to a selected cristallographic plane,
   b) depositing on the front face (21) of said part a mask (22) having an edge (24) parallel to the path of the selected cristallographic plane on the front face (21),
   c) carrying out anisotropic etching of the part through the mask (22), said etching giving rise to the appearance, along the edge of the mask, of an etched plane (24, 30, 42) corresponding to the selected cristallographic plane,
   d) depositing on said etched plane (24, 30, 42) means able to produce an acoustic wave (88) in the material,
   e) removing the mask.

2. Process according to claim 1, characterized in that the cristallographic plane chosen for forming the etched plane forms an acute angle with the direction perpendicular to the front face of the acoustooptical material part.

3. Process according to claim 1, characterized in that the cristallographic plane chosen for forming the etched plane is perpendicular to the front face of the acoustooptical material part.

4. Process according to claim 2 or 3, characterized in that the cristallographic plane chosen for the etched plane is of type (111).

5. Process according to claim 1, characterized in that an acoustooptical material part is produced having a rear face forming an acute angle with the front face.

6. Process according to claim 1, characterized in that for producing on the etched plane the acoustic wave excitation means (86), a first electrode (80) is deposited on the etched plane (40), followed by a piezoelectric material layer (82) and then a second electrode (84) is deposited on the piezoelectric material layer.

7. Process according to claim 1, characterized in that a microcell is produced for a switched microchip laser.

8. Acoustooptical cell for a switched laser obtained by the process according to any one of the claims 1 to 7, characterized in that it comprises a material block transparent to the amplification wavelength of the laser and able to propagate acoustic waves, said block having an etched face (24, 30, 40), which is a cristallographic plane, a front face (21) and a rear face (23) oriented with respect to said plane and means (86) able to produce an acoustic wave (88) deposited on the etched face (24, 30, 40).

9. Process for the collective production of microchip lasers having acoustooptical switching means, characterized in that it consists of carrying out the following operations in a random order:

   A) producing a first amplifying wafer (P1) from a material able to produce an optical amplification at a first wavelength under optical excitation at a second wavelength, said first wafer having a front face and a rear face,
   B) producing a second acoustooptical wafer (P2) by the following operations:

   a) the starting product is a wafer (20) made from a material transparent to the first amplification wavelength and able to propagate acoustic waves, said material being crystalline and having cristallographic planes, said second wafer having a front face (21) oriented with respect to a selected cristallographic plane,
   b) on the front face (21) of the second wafer is deposited a mask (22) formed by an array of patterns, each having at least one edge (24) parallel to the path of the selected cristallographic plane on the front face (21),
   c) the second wafer is anisotropically etched through said mask (22), said etching leading to the appearance between two adjacent patterns and along the said edge of the patterns of an etched plane corresponding to said selected cristallographic plane,

d) on each of said etched planes (24, 30, 40) are deposited means (86) able to produce an acoustic wave in the material of the second wafer,

e) the mask (22) is removed,

C) assembling the first wafer (P1) and the second wafer (P2) by placing the rear face of the second on the front face of the first,

D) forming an array of first micromirrors ($58_4$) on the rear face of the first wafer, said micromirrors being reflected at the first amplification wavelength and at least in part transparent at the second excitation wavelength,

E) forming an array of second micromirrors ($58_3$) on the front face of the second wafer, said second mirrors being reflecting at the first amplification wavelength,

F) cutting the assembly perpendicular to the wafers in order to separate the individual microchip lasers.

10. Process according to claim 11, characterized in that the cristallographic plane chosen for forming the etched plane forms an acute angle with the direction perpendicular to the front face of the second wafer.

11. Process according to claim 9 or 10, characterized in that the cristallographic plane chosen for the etched planes is of type (111).

12. Process according to claim 9, characterized in that the cristallographic plane chosen for forming the etched planes is perpendicular to the front face of the second wafer.

13. Process according to claim 9, characterized in that the second wafer is produced with a rear face forming an acute angle with the front face.

14. Process according to claim 9, characterized in that for producing on etched planes the means (86) for exciting an acoustic wave, a first electrode (80) is deposited on each etched plane (40), followed by the deposition of a piezoelectric material layer (82) and then a second electrode (84) is deposited on the piezoelectric material layer (82).

15. Process according to claim 9, characterized in that, during the assembly of the wafers, between the first and second wafers is intercalated an antireflection coating (63).

16. Process according to claim 9, characterized in that, for forming an array of micromirrors on one of the wafers, a transparent wall (50) is formed, on one of the faces of said wall is formed an array of micromirrors (58) and the wall (50) with its array of micromirrors is joined to the wafer.

17. Process according to claim 9, characterized in that each micromirror (58) of the array of first micromirrors and/or the array of the second micromirrors is concave.

18. Process according to claim 16, characterized in that the production of the array of micromirrors consists of coating the wall with an array of microlenses (56) and covering said microlenses with a coating (58) reflecting at the first amplification wavelength.

19. Process according to claim 16, characterized in that the production of the array of micromirrors consists of depositing on the wall (50) an array of FRESNEL microlenses (60) and covering said lenses with a coating reflecting at the first amplification wavelength.

20. Switched microchip laser obtained by the process according to any one of the claims 9 to 19,, characterized in that it comprises an amplifier microstrip (80) assembled with an acoustooptical switching microcell (82), said microcell having an etched face (40) covered with means (86) able to produce an acoustic wave, two micromirrors (74, 94) surrounding the microstrip-microcell assembly (80, 84).

**Patentansprüche**

1. Verfahren zur Herstellung einer akusto-optischen Zelle für gütegeschaltete Laser, **dadurch gekennzeichnet,** daß es die folgenden Schritte umfaßt:

a) Bereitstellen eines Stücks (20) aus akusto-optischem Material, durchlässig für die Verstärkungswellenlänge des Lasers und fähig, akustische Wellen auszubreiten, wobei dieses Material kristallin ist und kristallographische Ebenen bzw. Flächen besitzt und dieses Stück eine in bezug auf eine gewählte kristallographische Fläche orientierte Vorderseite (21) hat,

b) Aufbringen, auf der Vorderseite (21), einer Maske (22) mit einem Rand (24), parallel zu der Spur bzw. Linie der auf der Vorderseite (21) gewählten kristallographischen Fläche,

c) Durchführen einer anisotropen Ätzung des Stücks durch die Maske (22), wobei diese Ätzung längs des Rands der Maske eine geätzte Fläche (24, 30, 42) entsprechend der gewählten kristallographischen Ebene bzw. Fläche erscheinen läßt,

d) Abscheiden, auf dieser geätzten Fläche (24, 30, 42), der Einrichtungen (86), fähig zur Erzeugung einer akustischen Welle (88) in dem Material,

e) Entfernen der Maske.

2. Verfahren nach Anspruch 1, dadurch gekennzeichnet, daß die zum Bilden der geätzten Fläche gewählte kristallographische Fläche einen spitzen Winkel mit der Richtung bildet, die senkrecht ist zu der Vorderseite des Stücks aus akusto-optischem Material.

3. Verfahren nach Anspruch 1, dadurch gekennzeichnet, daß die zum Bilden der geätzten Fläche gewählte kristallographische Fläche senkrecht ist zu der Vorderseite des Stücks aus akusto-optischem Material.

4. Verfahren nach Anspruch 2 oder 3, dadurch gekennzeichnet, daß die für die geätzte Fläche gewählte kristallographische Ebene bzw. Fläche vom Typ (111) ist.

5. Verfahren nach Anspruch 1, dadurch gekennzeichnet, daß man ein Stück aus akusto-optischem Material mit einer Rückseite wählt, die mit der Vorderseite einen spitzen Winkel bildet.

6. Verfahren nach Anspruch 1, dadurch gekennzeichnet, daß man zur Herstellung der Anregungseinrichtungen (86) einer akustischen Welle auf der geätzten Fläche (40) eine erste Elektrode (80) abscheidet, anschließend eine Schicht aus einem piezoelektrischen Material (82) abscheidet und anschließend eine zweite Elektrode (84) auf dem piezoelektrische Material abscheidet.

7. Verfahren nach Anspruch 1, dadurch gekennzeichnet, daß man eine Mikrozelle für einen gütegeschalteten Mikrolaser herstellt.

8. Akustisch-optische Zelle für gütegeschaltete Laser, hergestellt mit dem Verfahren nach einem der Ansprüche 1 bis 7, dadurch gekennzeichnet, daß sie umfaßt:

-   einen Block aus einem Material, das durchlässig ist für die Verstärkungswellenlänge des Lasers und sich zur Ausbreitung akustischer Wellen eignet, wobei dieser Block eine geätzte Fläche (24, 30, 40) aufweist, die eine kristallographische Ebene bzw. Fläche ist, sowie eine Vorderseite (21) und eine Rückseite (23), die in bezug auf diese Ebene bzw. Fläche orientiert sind,
-   Einrichtungen (86) zum Erzeugen einer akustischen Welle (88), abgeschieden auf der geätzten Fläche (24, 30, 40).

9. Sammelherstellungsverfahren von Mikrolasern mit akusto-optischen Güteschaltungseinrichtungen, dadurch gekennzeichnet, daß es darin besteht, die folgenden Operationen in beliebiger Reihenfolge durchzuführen:

A) Herstellen eines ersten Verstärkerplättchens (P1) aus einem Material, fähig eine optische Verstärkung mit einer ersten Wellenlänge unter optischer Anregung mit einer zweiten Wellenlänge zu erzeugen, wobei dieses erste Plättchen eine Vorderseite und eine Rückseite hat,

B) Herstellen eines zweiten akusto-optischen Plättchens (P2) durch folgende Schritte:

a) Bereitstellen eines Plättchens (20) aus akusto-optischem Material, durchlässig für die Verstärkungswellenlänge des Lasers und fähig, akustische Wellen auszubreiten, wobei dieses Material kristallin ist und kristallographische Ebenen bzw. Flächen besitzt und dieses zweite Plättchen eine in bezug auf eine gewählte kristallographische Ebene bzw. Fläche orientierte Vorderseite (21) hat,

b) Aufbringen, auf der Vorderseite (21) des zweiten Plättchens (20), einer Maske (22), gebildet aus einer Vielzahl von Mustern, von denen jedes wenigstens einen Rand (24) hat, parallel zu der Spur bzw. Linie der auf der Vorderseite (21) gewählten kristallographischen Fläche,

c) Durchführen einer anisotropen Ätzung des zweiten Plättchens durch die Maske (22), wobei diese Ätzung zwischen zwei benachbarten Mustern und längs des besagten Rands der Muster eine geätzte Fläche entsprechend der gewählten kristallographischen Fläche erscheinen läßt,

d) Abscheiden, auf jeder dieser geätzten Flächen (24, 30, 40), der Einrichtungen (86), fähig zur Erzeugung einer akustischen Welle in dem Material des zweiten Plättchens,

e) Entfernen der Maske (22),

C) Zusammenfügen des ersten Plättchens (P1) und des zweiten Plättchens (P2), indem man die Rückseite des zweiten auf der Vorderseite des ersten anbringt,

D) Bilden einer Matrix aus ersten Mikrospiegeln ($58_4$) auf der Rückseite des ersten Plättchens, wobei diese ersten Mikrospiegel die erste Verstärkungswellenlänge reflektieren und wenigstens teilweise durchlässig sind für die zweite Anregungswellenlänge, E) Bilden einer Matrix aus zweiten Mikrospiegeln ($58_3$) auf der Vorderseite des zweiten Plättchens, wobei diese zweiten Spiegel die erste Verstärkungswellenlänge reflektieren,

F) das Ganze senkrecht zu den Plättchen durchschneiden, um die Einzelmikrolaser abzutrennen.

10. Verfahren nach Anspruch 11, dadurch gekennzeichnet, daß die zum Bilden der geätzten Flächen gewählte kristallographische Ebene bzw. Fläche mit der zur Vorderseite des zweiten Plättchen senkrechten Richtung einen spitzen Winkel bildet.

11. Verfahren nach Anspruch 9 oder 10, dadurch gekennzeichnet, daß die für die geätzte Fläche gewählte kristallographische Ebene bzw. Fläche vom Typ (111) ist.

12. Verfahren nach Anspruch 9, dadurch gekennzeichnet, daß die zum Bilden der geätzten Flächen gewählte kristallographische Ebene bzw. Fläche zu der Vorderseite des zweiten Plättchen senkrecht ist.

13. Verfahren nach Anspruch 9, dadurch gekennzeichnet, daß man das zweite Plättchen mit einer Rückseite herstellt, die mit der Vorderseite einen spitzen Winkel bildet.

14. Verfahren nach Anspruch 9, dadurch gekennzeichnet, daß man zur Herstellung der Anregungseinrichtungen (86) einer akustischen Welle auf jeder geätzten Fläche (40) eine erste Elektrode (80) abscheidet, anschließend eine Schicht aus einem piezoelektrischen Material (82) abscheidet und anschließend eine zweite Elektrode (84) auf dem piezoelektrische Material (82) abscheidet.

15. Verfahren nach Anspruch 9, dadurch gekennzeichnet, daß man beim Zusammensetzen der Plättchen zwischen dem ersten und dem zweiten Plättchen eine Anitreflexschicht (63) einfügt.

16. Verfahren nach Anspruch 9, dadurch gekennzeichnet, daß, um eine Mikrospiegel-Matrix auf einem der Plättchen zu bilden:

- man eine transparente Wand (50) herstellt,
- man auf einer der Flächen bzw. Seiten dieser Wand eine Mikrospiegel-Matrix (58) bildet,
- man die Wand (50) mit ihrer Mikrospiegel-Matrix auf dem Plättchen anbringt.

17. Verfahren nach Anspruch 9, dadurch gekennzeichnet, daß jeder Mikrospiegel (58) der Matrix der ersten Mikrospiegel und/oder der Matrix der zweiten Mikrospiegel konkav ist.

18. Verfahren nach Anspruch 16, dadurch gekennzeichnet, daß die Herstellung der Mikrospiegel-Matrix darin besteht, die Wand mit einer Matrix aus Mikrolinsen (56) zu überziehen und diese Mikrolinsen zu bedecken mit einer die erste Verstärkungswellenlänge reflektierenden Schicht (58).

19. Verfahren nach Anspruch 16, dadurch gekennzeichnet, daß die Herstellung der Mikrospiegel-Matrix darin besteht, auf der Wand (50) eine Matrix von FRESNEL-Mikrolinsen (60) abzuscheiden und diese Linsen mit einer die erste Verstärkungswellenlänge reflektierenden Schicht zu überziehen.

20. Gütegeschalteter Mikrolaser, hergestellt durch das Verfahren nach einem der Ansprüche 9 bis 19, dadurch gekennzeichnet, daß er einen Mikroverstärkerstab (80) umfaßt, zusammengebaut mit einer akusto-optischen Güteschaltungs-Mikrozelle (82), wobei diese Mikrozelle eine geätzte Fläche (40) umfaßt, bedeckt mit Einrichtungen (86), fähig eine akustische Welle zu erzeugen, und zwei Mikrospiegel (74, 94), die den Zusammenbau Mikrostab-Mikrozelle (80, 84) einrahmen bzw. einfassen.

FIG. 1

FIG. 2

# FIG. 3

FIG. 4

FIG. 5

# FIG. 6

86

21

109°,47

40

42

70°,53

α

20

88

40    80  82  84

70°,53

α

**FIG. 7**

86

30

88

30

84   82   80

32

20

**FIG. 8**

# FIG. 9

_a_

_b_

_c_

_d_

# FIG. 10

FIG.11

66

68

FIG. 12

P4    P1    P2    P3

102

74  72                              92    94

100

70    76        80        82    84    86    90

FIG. 13

134

M2

130

120

$I_1$

$k2$

$k_a$

$I_0$

110

M1

132

FIG. 14

FIG. 15

142

M2

134

130

120

$I_1$

$I_0$

110

TE

FIG. 16